# EUROPÄISCHE PATENTSCHRIFT

(11) **EP 2 855 237 B1**
(45) Veröffentlichungstag und Bekanntmachung des Hinweises auf die Patenterteilung: **09.11.2016**
(21) Anmeldenummer: 13709321.7
(22) Anmeldetag: 05.03.2013
(51) Int. Cl.: B62D 1/181, B62D 1/185

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 30.05.2012 DE 102012104644
(43) Veröffentlichungstag der Anmeldung: 08.04.2015
(73) Patentinhaber: ThyssenKrupp Presta Aktiengesellschaft, 9492 Eschen (LI); ThyssenKrupp AG, 45143 Essen (DE)
(72) Erfinder: RAUBER, Adrian, 9657 Unterwasser (CH); RAICH, Thomas, A-6773 Vandans (AT)
(74) Vertreter: ThyssenKrupp Intellectual Property GmbH
(86) Internationale Anmeldenummer: PCT/EP2013/000632
(87) Internationale Veröffentlichungsnummer: WO 2013/178302

(56) Entgegenhaltungen:
- EP-A2- 0 281 723
- JP-A- H06 286 620
- US-A1- 2011 175 335

## Beschreibung

Die vorliegende Erfindung betrifft eine Lenksäule für ein Kraftfahrzeug mit einem Mantelrohr zur drehbaren Lagerung einer Lenkspindel der Lenksäule und mit einem, das Mantelrohr zumindest bereichsweise umgreifenden Trägerkörper, wobei das Mantelrohr zumindest in einer Längsrichtung der Lenkspindel im Trägerkörper verschiebbar gelagert ist, wobei die Lenksäule zumindest eine Blattfeder aufweist, welche in einer Querrichtung orthogonal zur Längsrichtung der Lenkspindel gegen einen zylindermantelförmigen Abschnitt des Mantelrohres drückt, wobei die Blattfeder zumindest zwei in Umfangsrichtung des Mantelrohres voneinander distanzierte Auflageflächen aufweist, mit denen sie direkt oder unter Zwischenlage von zumindest einem Lagerkörper gegen das Mantelrohr drückt, wobei die Blattfeder sowohl beim direkten Andrücken an das Mantelrohr als auch beim Andrücken unter Zwischenlage des Lagerkörpers an das Mantelrohr ausschließlich mit ihrer dem Mantelrohr zugewandten Seite gegen das Mantelrohr drückt.

Bei gattungsgemäßen Lenksäulen handelt es sich also um solche Ausgestaltungsformen von Lenksäulen, bei denen die das Lenkrad tragende Lenkspindel in ihrer Position zumindest in Längsrichtung verstellbar ist, um die Position des Lenkrades an die Größe des Fahrzeuglenkers anzupassen. Die Verstellung der Position der Lenkspindel kann zumindest in Längsrichtung mittels eines motorischen Längsverstellantriebs erfolgen. In der Regel besitzen derartige Lenksäulen keinen gesonderten Feststellmechanismus, welcher in seiner Schließstellung die Lenkspindel in ihrer einmal eingestellten Position festhält. Die Fixierung der Position erfolgt in diesen Fällen über den motorischen Verstellmechanismus.

Generell ist es bei gattungsgemäßen Lenksäulen gewünscht, dass einerseits die Verstellung in Längsrichtung der Lenkspindel leichtgängig erfolgen kann. Andererseits soll aber auch ein hohes Maß an Spielfreiheit gegeben sein. Die Spielfreiheit in Längsrichtung der Lenkspindel kann durch die Anbindung der Lenkspindel an einen motorischen Längsverstellantrieb erreicht werden. In Querrichtung orthogonal zur Längsrichtung der Lenkspindel sind zum Erreichen der gewünschten Spielfreistellung des Mantelrohres gegenüber dem Trägerkörper in der Regel Zusatzmaßnahmen notwendig. So offenbart die JP 06286620 A eine Schiebeverbindung zwischen zwei Rohrteilen einer elektrisch verstellbaren Lenksäule, bei der ein Federmechanismus auf einen ebenen Umfangsabschnitt des innenliegenden Mantelrohres einwirkt, wobei dieses innenliegende Mantelrohr in V-förmig angeordnete ebene Oberflächenabschnitte im Trägerkörper mit Federvorspannung dringt. Diese technische Lösung benötigt allerdings viele Einzelkomponenten, ist aufwendig in der Darstellung und beschränkt die Gestaltung der Mantelrohre.

In der JP 2011-121440 A wird zur Spielfreistellung des Mantelrohres gegenüber dem Trägerkörper und damit zur Vermeidung von Klappergeräuschen eine das Mantelrohr mehr oder weniger vollständig umgebende Hülse zwischen dem Mantelrohr und dem Trägerkörper angeordnet. Ein Nachteil dieser Anordnung besteht darin, dass die Montage der Bauteile dieser Konstruktion relativ komplex ist.

In der US 2005/0066761 A1 ist eine motorisch verstellbare Lenksäule gezeigt, bei der eine Blattfeder in Längsrichtung der Lenkspindel angeordnet ist und über in Querrichtung angeordnete Klötze gegen das Mantelrohr drückt. Die DE 10 2010 037 312 B3 zeigt eine nur von Hand verstellbare Lenksäule, bei der eine Blattfeder dazu vorgesehen ist, keilförmige Körper in Umfangsrichtung zwischen das Mantelrohr und den Trägerkörper zu drängen.

Die US 2011/0175335 A1 zeigt eine gattungsgemäße Lenksäule für ein Kraftfahzeug. Diese ist von Hand verstellbar. Das Mantelrohr wird mittels einer Blattfeder unter Zwischenlage eines Lagerkörpers an den das Mantelrohr zumindest bereichsweise umgreifenden Trägerkörper angedrückt. Das Andrücken des Lagerkörpers an das Mantelrohr erfolgt vollflächig unter Zwischenschaltung eines am Mantelrohr angeschweißten Aufnahmeteils für den Lagerkörper.

Die Aufgabe der Erfindung besteht darin, eine Lenksäule der eingangs genannten Art bereitzustellen, bei der mit einfachen Mitteln eine verbesserte Spielfreistellung zwischen Mantelrohr und Trägerkörper ermöglicht ist.

Dieses Ziel wird durch erfindungsgemäße Lenksäulen gemäß Patentanspruch 1 erreicht.

Es ist somit vorgesehen, dass die Blattfeder an zumindest zwei in Umfangsrichtung des Mantelrohres voneinander distanzierten Stellen gegen das Mantelrohr rückt.

Bevorzugt wird die Erfindung für Lenksäulen angewendet, bei denen das Mantelrohr zumindest in einer Längsrichtung der Lenkspindel mittels eines motorischen Längsverstellantriebs der Lenksäule im Trägerkörper verschiebbar gelagert ist.

Durch das Belasten des Mantelrohres mittels des Anpressdruckes der Blattfeder in der Querrichtung orthogonal zur Längsrichtung der Lenkspindel an zumindest zwei in Umfangsrichtung des Mantelrohres voneinander distanzierten Stellen wird in einfacher Art und Weise erreicht, dass das Mantelrohr gegen den das Mantelrohr umgreifenden Trägerkörper gedrängt wird, womit die gewünschte Spielfreistellung in Querrichtung erreicht wird. Hierbei ist vorgesehen, dass die Blattfeder auf einen zylindermantelförmigen Abschnitt des Mantelrohres drückt, was wiederum eine sehr einfache Konstruktion des Mantelrohres erlaubt. In besonders einfachen Ausgestaltungsformen der Erfindung kann die Blattfeder direkt auf das Mantelrohr drücken, also das Mantelrohr in seinem zylindermantelförmigen Abschnitt direkt berühren. Es ist aber auch ein indirektes Andrücken der Blattfeder an den genannten zylindermantelförmigen Abschnitt des Mantelrohres möglich. So sehen entsprechende Ausgestaltungsformen der Erfindung vor, dass die Blattfeder unter Zwischenlage von zumindest einem Lagerkörper gegen das Mantelrohr drückt. Der Lagerkörper kann aus Kunststoff z.B. als Spritzgussteil ausgeführt sein. Bevorzugte Varianten sehen vor, dass die Blattfeder unter Zwischenlage von zwei voneinander distanziert angeordneten Lagerkörpern gegen das Mantelrohr drückt. Dabei ist es besonders zu bevorzugen, wenn die beiden Lagerkörper mit einem Verbindungsabschnitt zu einem Bauteil, einem Lagerelement, verbunden sind. Insbesondere können die Lagerkörper und der Verbindungsabschnitt als ein einziges gemeinsames Teil, bevorzugt in einem Spritzgussverfahren, hergestellt sein. Zur optimalen formschlüssigen Anpassung an den zylindermantelförmigen Abschnitt des Mantelrohres können die Lagerkörper in einem Querschnitt zumindest bereichsweise keilförmig ausgebildet sein. Besonders günstig ist es, wenn zumindest eine bereichsweise zylindermantelförmig gekrümmte Oberfläche zur Anlage am Mantelrohr beim Lagerkörper vorgesehen ist. In Kombination dieser beiden bevorzugten Varianten ist der Lagerkörper dann im Querschnitt bereichsweise keilförmig, wobei zumindest eine seiner Oberflächen zur Anlage am Mantelrohr zylindermantelförmig gekrümmt ist. Zur Vereinfachung der Montage ist die Blattfeder durch seitlich angeordnete Clipse in dem einteiligen Lagerelement gehalten. Auch diese Clipse können direkt gemeinsam mit den Lagerkörpern und dem Verbindungsabschnitt im Spritzgussverfahren ausgebildet sein.

Günstig ist es, wenn die Blattfeder mit ihren in Umfangsrichtung des Mantelrohres voneinander distanzierten Auflageflächen an den in Umfangsrichtung des Mantelrohres voneinander distanzierten Stellen gegen das Mantelrohr drückt. An diesen in Umfangsrichtung des Mantelrohrs voneinander distanzierten Stellen bzw. Bereichen kann dann jeweils einer der genannten Lagerkörper angeordnet sein. Bei solchen Ausgestaltungsformen sind die Lagerkörper, wie oben ausgeführt, bevorzugt miteinander verbunden und weiter bevorzugt als Baugruppe mit der Blattfeder vormontiert.

Im Sinne einer möglichst einfachen Konstruktion sehen bevorzugte Ausgestaltungsformen der Erfindung vor, dass das Mantelrohr auf der der Blattfeder gegenüberliegenden Seite ausschließlich unter Zwischenschaltung eines Schmiermittelfilms am Trägerkörper anliegt. In diesen Varianten drückt die Blattfeder das Mantelrohr somit auf der der Blattfeder gegenüberliegenden Seite direkt an den Trägerkörper. Dies aber unter Zwischenschaltung eines Schmiermittelfilms, um die Längsverstellung in Längsrichtung der Lenkspindel mittels des motorischen Längsverstellantriebs mit möglichst geringem Kraftaufwand zu realisieren.

Im Sinne einer möglichst einfachen Montage sehen besonders bevorzugte Varianten der Erfindung vor, dass die Blattfeder in einer Öffnung im Trägerkörper angeordnet ist, wobei die Blattfeder zur Montage von außen durch die Öffnung hindurch einführbar und gegen das Mantelrohr drückbar ist. Hierdurch ist es möglich, zunächst das Mantelrohr in den Trägerkörper einzuführen und dann die Blattfeder von außen durch die Öffnung hindurch gegen das Mantelrohr zu drücken. Dabei kann die Blattfeder auf ihrer von dem Mantelrohr abgewandten Seite mittels zumindest eines Bolzens oder zumindest einer Schraube abgestützt werden. Insbesondere bei der Verwendung einer Schraube ist es dabei möglich, zur Einstellung der Vorspannung die Schraube in der genannten Querrichtung verstellbar auszugestalten. Natürlich ist grundsätzlich eine Einstellung der Vorspannung durch einen in Querrichtung verstellbaren Bolzen ebenfalls möglich. Ein bevorzugtes Verfahren zur Montage der Blattfeder in der erfindungsgemäßen Lenksäule sieht somit vor, dass die Blattfeder in einer Öffnung im Trägerkörper angeordnet wird, wobei die Blattfeder zur Montage von außen durch die Öffnung hindurch eingeführt und gegen das Mantelrohr gedrückt wird. Die Blattfeder kann in diesem Zusammenhang als Baugruppe zusammen mit den oben genannten Lagerkörpern oder dem oben genannten Lagerelement durch die Öffnung hindurch montiert werden. Falls Lagerkörper zum Einsatz kommen, ist es aber auch möglich, diese zunächst getrennt von der Blattfeder von außen durch die Öffnung hindurch einzuführen und gegen das Mantelrohr zu legen, um dann anschließend die Montage der Blattfeder in der genannten Art und Weise durchzuführen.

Um die genannte Montage in der Öffnung im Trägerkörper zu ermöglichen, ist bevorzugt vorgesehen, dass die Blattfeder in einer Öffnung im Trägerkörper angeordnet ist, wobei eine Öffnungsfläche der Öffnung zumindest so groß wie die Blattfeder ist. Bevorzugt ist vorgesehen, dass die Öffnung im Trägerkörper ausschließlich von zueinander parallelen Wänden begrenzt ist. Bevorzugte Ausgestaltungsformen der Erfindung sehen weiters vor, dass sich die Blattfeder über höchstens die Hälfte des Umfangs des Mantelrohres erstreckt. Besonders bevorzugt erstreckt sich die Blattfeder über höchstens ein Viertel des Umfangs des Mantelrohres, da dadurch eine gute Abstützung erreicht werden konnte.

Der Umfang des Mantelrohres ist dabei im Bereich des zylindermantelförmigen Abschnitts des Mantelrohres heranzuziehen, in dem die Blattfeder auch gegen das Mantelrohr drückt.

Bei Lenksäulen, bei denen das Mantelrohr in der Längsrichtung der Lenkspindel mittels eines motorischen Längsverstellantriebs im Trägerkörper verschoben wird, kann vorgesehen sein, dass das Festhalten der Lenkspindel in Längsrichtung ohne ein, bei von Hand verstellbaren Lenksäulen übliches Verspannen zwischen Trägerkörper und Mantelrohr realisiert wird. In diesem Zusammenhang sehen bevorzugte Ausgestaltungsformen der Erfindung somit vor, dass das Mantelrohr in der jeweils eingestellten Position in Längsrichtung der Lenkspindel, vorzugsweise ausschließlich, vom motorischen Längsverstellantrieb gehalten ist. Auf die bei von Hand verstellbaren Lenksäulen bekannten Feststellmechanismen kann bei solchen Lenksäulen in der Regel somit verzichtet werden. Entsprechend erfolgt bei solchen Lenksäulen mit Vorzug die Fixierung der in Längsrichtung einstellbaren Position ausschliesslich über den motorischen Verstellmechanismus und nicht über eine Verspannung zwischen dem Trägerkörper und dem Mantelrohr.

Der Vollständigkeit halber wird noch darauf hingewiesen, dass das Mantelrohr die Lenkspindel günstigerweise teilweise oder ganz umschließt. Die Lenkspindel ist um ihre Längsachse bzw. Längsrichtung drehbar im Mantelrohr gelagert, um eine Lenkbewegung des Lenkrades auf die Räder des Kraftfahrzeugs übertragen zu können. Zur Verstellung der Position der Lenkspindel in Längsrichtung wird diese zusammen mit dem Mantelrohr vom motorischen Längsverstellantrieb im Trägerkörper verschoben. Der Trägerkörper kann das Mantelrohr bereichsweise oder vollständig umgreifen. Hierzu kann der Trägerkörper einen entsprechenden Hohlraum aufweisen, in dem das Mantelrohr verschiebbar gelagert ist. Er weist günstigerweise einen zylinderförmigen Hohlraum zur Aufnahme des Mantelrohres auf. Über den Trägerkörper werden das Mantelrohr und die Lenkspindel dann direkt oder indirekt an der Karosserie des Fahrzeuges befestigt. Zur Längsrichtung der Lenkspindel wird der Vollständigkeit halber darauf hingewiesen, dass dies die Richtung der Längserstreckung der Lenkspindel ist. Die Drehachse, um die die Lenkspindel drehbar im Mantelrohr gelagert ist, verläuft in der Regel in dieser Längsrichtung. Der motorische Längsverstellantrieb ist, soweit er vorhanden ist, meist mehrteilig aufgebaut. Er kann z.B. einen Motor, insbesondere einen elektrischen Motor, ein Getriebe und/oder eine vom Motor samt Getriebe angetriebene Spindel umfassen. An dieser Spindel kann dann z.B. das Mantelrohr befestigt sein.

Der Vollständigkeit halber wird darauf hingewiesen, dass erfindungsgemäße Lenksäulen natürlich nicht nur in Längsrichtung der Lenkspindel sondern auch in anderen Richtungen z.B. in der Höhe verstellbar sein können. Zur Höhenverstellung kann dann z.B. ein motorischer Höhenverstellantrieb vorgesehen sein.

Weitere Merkmale und Ausgestaltungsformen bevorzugter Varianten der Erfindung werden nachfolgend anhand von erfindungsgemäßen Ausführungsbeispielen erläutert. Es zeigen:
Fig. 1 bis 6 Darstellungen zu einem ersten erfindungsgemäßen Ausführungsbeispiel;
Fig. 7 bis 9 ein zweites erfindungsgemäßes Ausführungsbeispiel;
Fig. 10 eine weitere Variante zu dem zweiten Ausführungsbeispiel;
Fig. 11 und 12 eine weiteres Ausführungsbeispiel.

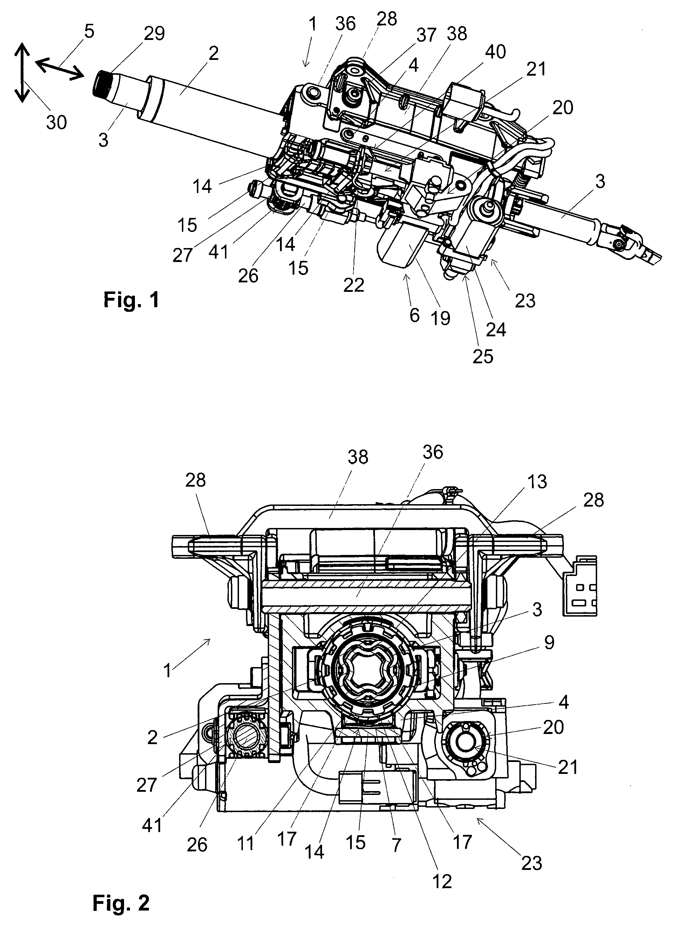

Fig. 1 zeigt eine perspektivische Darstellung von schräg unten auf das erste erfindungsgemäße Ausführungsbeispiel einer Lenksäule 1. Die Lenkspindel 3 ist in Längsrichtung 5 längserstreckt und um eine entlang dieser Längsrichtung 5 verlaufende Drehachse herum drehbar in dem Mantelrohr 2 gelagert. Am Lenkradanschluss 29 der Lenkspindel 3 kann ein hier nicht dargestelltes Lenkrad in an sich bekannter Art und Weise befestigt werden. Auf der dem Lenkradanschluss 29 gegenüberliegenden Seite führt die Lenkspindel 3, unter Zwischenschaltung eines Universalgelenkes, zu einem hier nicht weiter dargestellten Lenkgetriebe, welches in der Regel auf die Vorderräder des Kraftfahrzeuges einwirkt. Die Lenksäule 1 wird mittels der Befestigungslaschen 28, die an einer Haltekonsole 38 angeordnet sind, an einer hier nicht dargestellten Karosserie eines Kraftfahrzeuges befestigt. Das Mantelrohr 2 ist in Längsrichtung 5 verschiebbar im Trägerkörper 4 gelagert. Eine Verschiebung von Mantelrohr 2 und Lenkspindel 3 relativ zum Trägerkörper 4 in der Längsrichtung 5 erfolgt aber ausschließlich über den motorischen Längsverstellantrieb 6. Hierdurch ist das Mantelrohr 2, wenn keine Verstellung vorgenommen wird, vom motorischen Längsverstellantrieb 6 in seiner Position in Längsrichtung 5 gesehen, auch festgehalten. Der motorische Längsverstellantrieb 6 umfasst im gezeigten Ausführungsbeispiel einen elektrischen Motor 19, ein Getriebe 20 und eine Spindel 21. Eine Gewindemutter 40 des Längsverstellantriebes 6 ist mittels des Flansches 22 am Mantelrohr 2 befestigt. Zur Verstellung des Mantelrohrs 2 in Längsrichtung 5 relativ zum Trägerkörper 4 verschiebt der Motor 19 mittels des Getriebes 20 über die Spindel 21 die Gewindemutter 40 und damit auch den Flansch 22 und das Mantelrohr 2 in Längsrichtung 5. Das Mantelrohr 2 kann dabei samt Lenkspindel 3 aus dem Trägerkörper 4 sowohl in Richtung hin zum hier nicht dargestellten Fahrzeuglenker ausgefahren als auch in Gegenrichtung eingezogen werden.

In diesem ersten Ausführungsbeispiel ist das Mantelrohr 2 aber nicht nur in den Längsrichtungen 5 sondern auch in den Höhenrichtungen 30 verstellbar. Für diese Verstellung ist der motorische Höhenverstellantrieb 23 vorgesehen. Dieser umfasst wiederum einen Motor 24, ein Getriebe 25, eine Spindel 26 und einen Schwenkhebel 27. Der Schwenkhebel ist mit einer Achse 36 drehbar im Trägerkörper gelagert und mit einer Achse 37 drehbar in der Haltekonsole 38 gelagert. Der Motor 24 bewegt über das Getriebe 25, durch Drehung der Spindel 26, eine Gewindemutter 41, die mit dem Schwenkhebel 27 gekoppelt ist, was zu einer Verschwenkbewegung des Schwenkhebels 27 und dann in an sich bekannter Art und Weise zu einer Höhenverstellung des Mantelrohres 2 samt Lenkspindel 3 in einer der Höhenrichtungen 30 führt.

Fig. 2 zeigt eine Ansicht im Querschnitt, orthogonal zur Längsachsrichtung 5 von hinten, also von der Lenkradseite auf die Lenksäule 1 gemäß Fig. 1. Hier ist bereits zu erkennen, dass das Mantelrohr 2 von der Blattfeder 7 in einer Querrichtung 8 orthogonal zur Längsrichtung 5 gegen den Trägerkörper 4 gedrückt wird. Die Querrichtung 8 kann der Radialrichtung entsprechen. Sie kann wie hier aber auch davon abweichen. Sie verläuft aber immer orthogonal zur Längsrichtung 5. Die Blattfeder 7 ist in einer Öffnung 14 im Trägerkörper 4 angeordnet und wird auf der dem Mantelrohr 2 entgegengesetzten Seite von einem Bolzen 15, welcher am Trägerkörper 4 befestigt ist, abgestützt.

Im gezeigten Ausführungsbeispiel drückt die Blattfeder 7 nicht direkt auf die in Umfangsrichtung voneinander distanzierten Stellen bzw. Bereichen 11 und 12 des zylindermantelförmigen Abschnitts 9 des Mantelrohres 2. Es ist hier in diesem Ausführungsbeispiel vielmehr vorgesehen, dass die Blattfeder 7 unter Zwischenschaltung eines Lagerelementes, umfassend zwei keilförmig ausgebildete Lagerkörper 17, gegen den zylindermantelförmigen Abschnitt 9 des Mantelrohres 2 drückt. Auf der der Blattfeder 7 gegenüberliegenden Seite liegt das Mantelrohr 2 ausschließlich unter Zwischenschaltung eines Schmiermittelfilms 13 direkt am Trägerkörper 4 an.

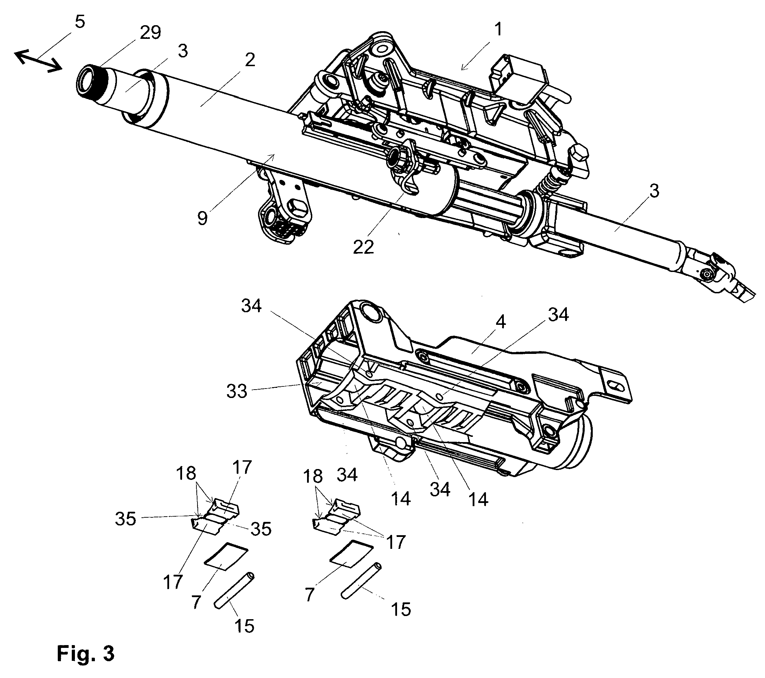

Fig. 3 zeigt eine Explosionsdarstellung der Lenksäule des ersten Ausführungsbeispiels, wobei allerdings einige Bauteile weggelassen sind. Gut zu sehen ist der Trägerkörper 4 mit seinem zumindest bereichsweise zylindermantelförmigem Hohlraum 33, in dem das Mantelrohr 2 in Längsrichtung 5 verschiebbar gelagert ist. Gut zu sehen sind in dieser Darstellung auch der zylindermantelförmige Abschnitt 9 gegen den die Blattfeder 7 unter Zwischenschaltung der Lagerkörper 17 drückt. Ebenfalls gut zu sehen sind die Öffnungen 14 im Trägerkörper 4, durch die hindurch die Blattfedern 7 samt Lagerkörpern 17 von außen montiert werden können um dann gegen den zylindermantelförmigen Abschnitt 9 zu drücken. Die Befestigung der Blattfedern 7 in den Öffnungen 14 erfolgt in diesem ersten Ausführungsbeispiel mittels der Bolzen 15, welche in den entsprechenden Aufnahmen 34 des Trägerkörpers 4 fixiert werden.

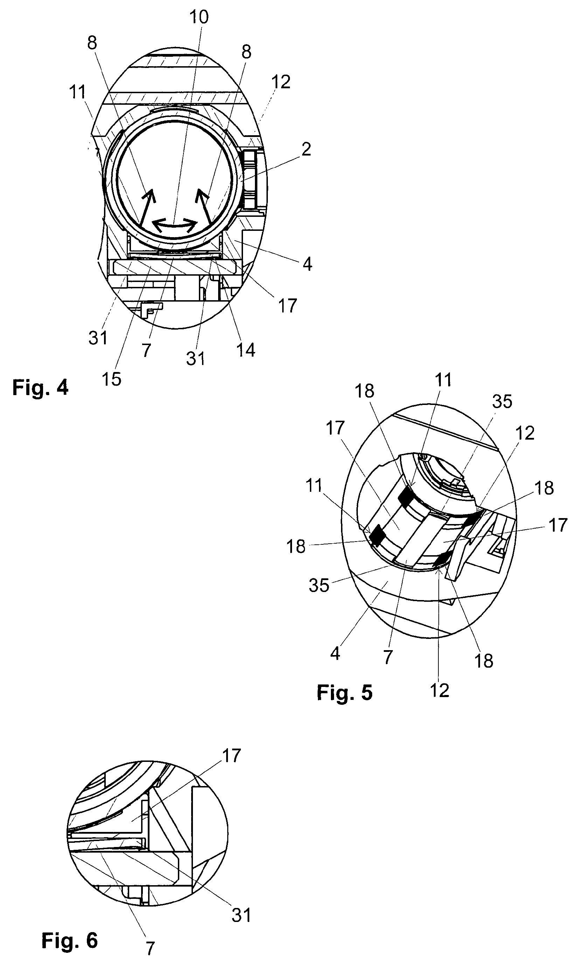

Fig. 4 zeigt vergrößert, wie die Blattfeder 7 unter Zwischenschaltung der Lagerkörper 17 an den in Umfangsrichtung 10 voneinander distanzierten Stellen bzw. Bereichen 11 und 12 gegen das Mantelrohr 2 in Querrichtung 8 orthogonal zur Längsrichtung 5 drückt. Auf der dem Mantelrohr 2 abgewandten Seite ist die Blattfeder 7 am Bolzen 15 abgestützt. Die Blattfeder 7 drückt an den entsprechenden, in Umfangsrichtung voneinander distanzierten Stellen bzw. Bereichen 11 und 12 auf die Lagerkörper 17. Die Lagerkörper 17 sind wie in Fig. 4 gut zu sehen, im Querschnitt keilförmig ausgebildet und weisen zylindermantelförmig gekrümmte Oberflächen 18 zur Anlage am Mantelrohr 2 bzw. dessen zylindermantelförmigem Abschnitt 9 auf. Letzteres ist besonders gut in Fig. 5 zu sehen. Aus dieser Darstellung geht auch gut hervor, dass in diesem bevorzugten Ausgestaltungsbeispiel die Lagerkörper 17 mit einem Verbindungsabschnitt, beispielsweise in Form der Verbindungsstege 35, zu einem zusammenhängenden Bauteil zusammengefasst werden können. Dies erleichtert die Montage.

Wie bereits Fig. 4 zu entnehmen ist, drückt die Blattfeder 7 in diesem Ausführungsbeispiel in den Bereichen knapp vor ihren Enden 31 gegen die jeweiligen Lagerkörper 17 und ist im Bereich dazwischen, hier in der Mitte, am Bolzen 15 abgestützt. Fig. 6 zeigt vergrößert, dass in bevorzugten Ausgestaltungsformen die Enden 31 der Blattfeder 7 etwas in Richtung weg vom Lagerkörper 17 gebogen sind. Dies hat zur Folge, dass im Bereich der Auflage der Blattfeder 7 am Lagerkörper 17 keine scharfen Kanten vorhanden sind, welche zu einem Einschneiden der Blattfeder 7 in den Lagerkörper 17 führen könnten. Natürlich kann auch in Ausführungsbeispielen, bei denen auf Lagerkörper 17 verzichtet wird und die Blattfeder 7 direkt auf das Mantelrohr 2 drückt, mit entsprechend aufgebogenen Enden 31 zur Ausbildung von abgerundeten Auflageflächen gearbeitet werden.

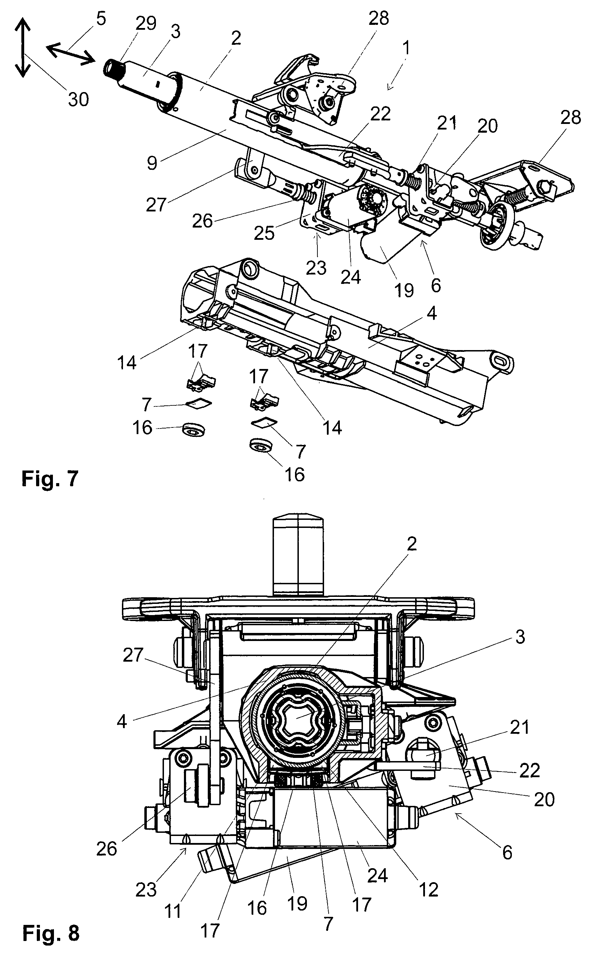

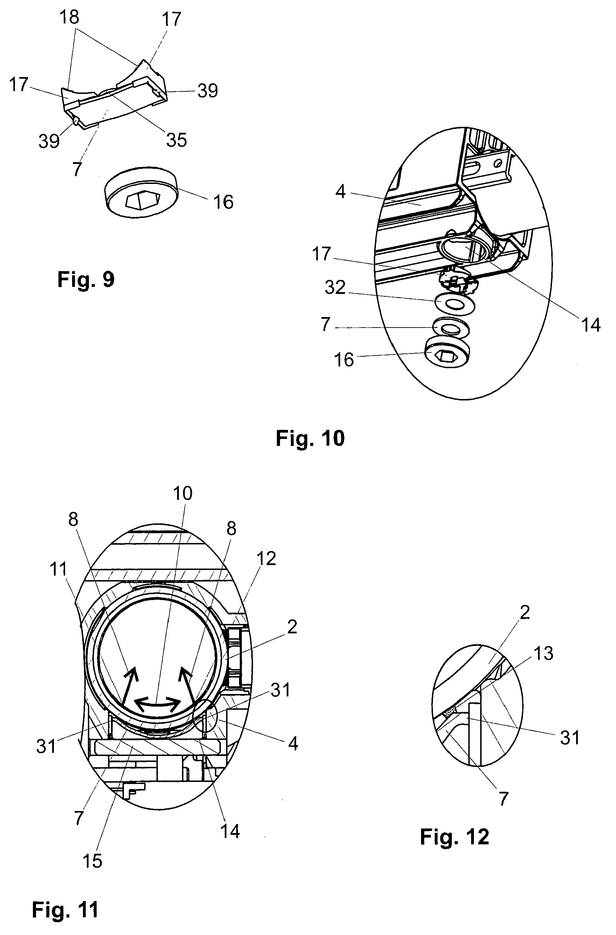

Die Fig. 7 bis 9 zeigen ein zweites Ausführungsbeispiel der Erfindung, bei dem zur rückseitigen Abstützung der Blattfeder 7 anstelle des Bolzens 15 eine Schraube 16 vorgesehen ist. Die Schraube 16 wird in ein entsprechendes Gewinde im Trägerkörper 4, im Bereich der Öffnung 14 eingeschraubt. Durch entsprechendes Schrauben in die eine oder andere Richtung können in diesem Ausführungsbeispiel die Vorspannung der Blattfeder 7 und damit die Kräfte, mit denen das Mantelrohr 2 gegen den Trägerkörper 4 gedrückt wird, eingestellt werden. Entsprechend diesem zweiten Ausführungsbeispiel sind die Verstellgetriebe 20, 25 gegenüber dem ersten Ausführungsbeispiel modifiziert. Die Wirkung entspricht aber im Wesentlichen der Wirkung des ersten Ausführungsbeispiels, sodass bezüglich der weiteren Details dieser Variante auf die Schilderung des ersten Ausführungsbeispiels verwiesen werden kann. Der wesentliche Unterschied besteht darin, dass im ersten Ausführungsbeispiel die Spindeln 21, 26 verdreht werden und dadurch die Gewindemuttern 40, 41 verschoben werden, während in diesem Ausführungsbeispiel die hier in den Getrieben 20 und 25 angeordneten Gewindemuttern verdreht werden und dadurch die Spindeln 21, 26 verschoben werden. Es ist offensichtlich, dass die verschiedenen Getriebevarianten frei mit den erfindungsgemäßen Varianten der Ausbildung der Spielfreisetzung kombinierbar sind. Fig. 7 zeigt jedenfalls eine zu Fig. 3 ähnliche Explosionsdarstellung. Fig. 8 zeigt eine Ansicht im Querschnitt, von hinten - dem lenkradseitigen Ende der Lenksäule - gesehen, analog wie Fig. 2. In Fig. 9 sind die Baueinheit bestehend aus dem Lagerelement, das die beiden über die Verbindungsstege 35 miteinander verbundene Lagerkörper 17 umfasst und mit den Clipsen 39 die Blattfeder 7 hält, sowie die Schraube 16 dargestellt. Zu den ersten beiden Ausführungsbeispielen wird noch darauf hingewiesen, dass die Blattfeder 7 jeweils in einer Draufsicht rechteckig ausgebildet ist. Weiters ist sie in ihrer Fläche kleiner als die Öffnung 14, sodass die Blattfeder wie auch die Lagerkörper 17 in die Öffnung 14 eingeführt werden können.

Fig. 10 zeigt eine Alternative zu Fig. 9. In Fig. 10 ist die Blattfeder 7 in Form eines Ringes und nicht in Rechteckform ausgebildet. In dieser Ausführungsvariante wird über die Zwischenlage eine Beilagscheibe 32 verhindert, dass sich Kanten der Blattfeder 7 in die auch hier mittels Verbindungsstegen 35 zusammenhängenden Lagerkörper 17 aus Kunststoff eingraben können. Im Ausführungsbeispiel gemäß Fig. 10 ist die Vorspannung der Blattfeder 7 ebenfalls über die Schraube 16 einstellbar.

In Fig. 11 und in Fig. 12 ist eine Ausführungsform der Erfindung ohne Lagerkörper dargestellt. Die Ausführung entspricht sonst im Wesentlichen dem Beispiel, wie es in Fig. 4 gezeigt ist. Bei der Ausführung ohne Lagerkörper liegt die Blattfeder 7 an den in Umfangsrichtung beabstandeten Bereichen 11, 12 direkt an der Oberfläche des Mantelrohres 2 an. Dabei kann, wie in Fig. 12 veranschaulicht ein Schmierfilm 13 zur Reibungsverminderung vorgesehen sein.

Als Schmierstoffe sind Fette oder auch Festschmierstoffe geeignet. Es kann aber auch eine Oberflächenbehandlung, insbesondere eine Oberflächenbeschichtung einer der in Kontakt stehenden Flächen vorgesehen sein.

Durch das erfindungsgemäße Andrücken der Blattfeder an den zylindermantelförmigen Abschnitt des Mantelrohres und die dadurch erreichte Spielfreistellung wird eine optimale Abstützung des Mantelrohres 2 im Trägerkörper 4 mit einfachsten Mitteln erreicht. Dies führt auch zu einer Reduzierung eines Auswanderns des Mantelrohrs bei der Verstellung in den Richtungen senkrecht zur Längsrichtung 5 der Lenksäule 1. Besonders günstig ist es dabei, wenn der Abstand zwischen den Stellen bzw. Bereichen 11 und 12 möglichst groß gewählt wird. Die Stellen bzw. Bereiche 11 und 12 sollten dabei günstigerweise symmetrisch bezüglich einer Ebene, in der die Längsrichtung 5 verläuft, angeordnet sein. Die Blattfeder sorgt durch ihre Elastizität für den Ausgleich von Unebenheiten im System. Dabei ist der Einsatz der Blattfeder auch deshalb von Vorteil, weil dadurch ein relativ großer Federweg mit einfachsten Mitteln zur Verfügung gestellt ist und sich weiters bei entsprechender Ausführung auch nicht in die Lagerkörper 17 eingräbt. Zusätzlich kann mit einer Blattfeder 7 gezielt an den gewünschten Stellen bzw. Bereichen 11 und 12 die Kraft in das Mantelrohr 2 eingeleitet werden. Die Verwendung eines Bolzens 15 in Form eines Passstiftes ist eine besonders preisgünstige Lösung.

Bei allen gezeigten erfindungsgemäßen Ausführungsbeispielen ist vorgesehen, dass die Blattfeder 7 zumindest zwei in Umfangsrichtung 10 des Mantelrohres voneinander distanzierte Auflageflächen aufweist, mit denen sie direkt oder unter Zwischenlage von zumindest einem Lagerkörper 17 gegen das Mantelrohr 2 drückt. Dabei drückt die Blattfeder 7 ausschließlich mit ihrer dem Mantelrohr 2 zugewandten Seite gegen das Mantelrohr 2. Dies gilt sowohl für den Fall, dass die Blattfeder 7 direkt gegen das Mantelrohr 2 drückt, als auch für den Fall, dass dieses Andrücken unter Zwischenlage des oder mehrerer Lagerkörper 17 erfolgt. Generell ist günstigerweise vorgesehen, dass die Blattfeder 7 mit ihren in Umfangsrichtung 10 des Mantelrohres 2 voneinander distanzierten Auflageflächen an den in Umfangsrichtung 10 des Mantelrohres voneinander distanzierten Stellen 11, 12 gegen das Mantelrohr 2 drückt. Die entsprechenden Auflageflächen der Blattfeder 7 können, aber müssen nicht, im Bereich knapp vor den Enden 31 der Blattfeder 7 angeordnet sein. Für die Anordnung der Auflageflächen gilt bevorzugt dieselbe Symmetrie wie bei den Stellen bzw. Bereichen 11, 12 an denen die Blattfeder 7 bzw. ihre Auflageflächen am Mantelrohr 2 anliegen.

Wie in den einzelnen Ausführungsbeispielen auch realisiert, ist günstigerweise vorgesehen, dass die Öffnung 14 im Trägerkörper 4 ausschließlich von zueinander parallelen Wänden begrenzt ist. Es kann sich z.B. um paarweise zueinander parallele Wände handeln. Die Wände sind in der Regel Teil des Trägerkörpers 4.

**Legende zu den Hinweisziffern:**

| | | | |
|---|---|---|---|
| 1 | Lenksäule | 26 | Spindel |
| 2 | Mantelrohr | 27 | Schwenkhebel |
| 3 | Lenkspindel | 28 | Befestigungslasche |
| 4 | Trägerkörper | 29 | Lenkradanschluss |
| 5 | Längsrichtung | 30 | Höhenrichtung |
| 6 | motorischer Längsverstellantrieb | 31 | Ende |
| | | 32 | Beilagscheibe |
| 7 | Blattfeder | 33 | Hohlraum |
| 8 | Querrichtung | 34 | Aufnahme |
| 9 | zylindermantelförmiger | 35 | Verbindungssteg |
| | Abschnitt | 36 | Achse |
| 10 | Umfangsrichtung | 37 | Achse |
| 11 | Bereich | 38 | Haltekonsole |
| 12 | Bereich | 39 | Clip |
| 13 | Schmiermittelfilm | 40 | Gewindemutter |
| 14 | Öffnung | 41 | Gewindemutter |
| 15 | Bolzen | | |
| 16 | Schraube | | |
| 17 | Lagerkörper | | |
| 18 | Oberfläche | | |
| 19 | Motor | | |
| 20 | Getriebe | | |
| 21 | Spindel | | |
| 22 | Flansch | | |
| 23 | motorischer Höhenverstellantrieb | | |
| 24 | Motor | | |
| 25 | Getriebe | | |

## Patentansprüche

1. Lenksäule (1) für ein Kraftfahrzeug mit einem Mantelrohr (2) zur drehbaren Lagerung einer Lenkspindel (3) der Lenksäule (1) und mit einem, das Mantelrohr (2) zumindest bereichsweise umgreifenden Trägerkörper (4), wobei das Mantelrohr (2) zumindest in einer Längsrichtung (5) der Lenkspindel (3) im Trägerkörper (4) verschiebbar gelagert ist, wobei die Lenksäule (1) zumindest eine Blattfeder (7) aufweist, welche in einer Querrichtung (8) orthogonal zur Längsrichtung (5) der Lenkspindel (3) gegen einen zylindermantelförmigen Abschnitt (9) des Mantelrohres (2) drückt, wobei die Blattfeder (7) zumindest zwei in Umfangsrichtung (10) des Mantelrohres (2) voneinander distanzierte Auflageflächen aufweist, mit denen sie direkt oder unter Zwischenlage von zumindest einem Lagerkörper (17) gegen das Mantelrohr (2) drückt, wobei die Blattfeder (7) sowohl beim direkten Andrücken an das Mantelrohr (2) als auch beim Andrücken unter Zwischenlage des Lagerkörpers (17) an das Mantelrohr (2) ausschließlich mit ihrer dem Mantelrohr (2) zugewandten Seite gegen das Mantelrohr (2) drückt,
**dadurch gekennzeichnet,**
**dass** die Blattfeder (7) an zumindest zwei in Umfangsrichtung (10) des Mantelrohres (2) voneinander distanzierten Stellen (11, 12) gegen das Mantelrohr (2) drückt.

2. Lenksäule nach Anspruch 1, **dadurch gekennzeichnet, dass** das Mantelrohr zumindest in der Längsrichtung (5) der Lenkspindel (3) mittels eines motorischen Längsverstellantriebs (6) der Lenksäule (1) im Trägerkörper verschiebbar gelagert ist.

3. Lenksäule nach Anspruch 1 oder 2, **dadurch gekennzeichnet, dass** die Blattfeder (7) mit ihren in Umfangsrichtung (10) des Mantelrohres (2) voneinander distanzierten Auflageflächen an den in Umfangsrichtung (10) des Mantelrohres (2) voneinander distanzierten Stellen (11, 12) gegen das Mantelrohr (2) drückt.

4. Lenksäule (1) nach einem der Ansprüche 1 bis 3, **dadurch gekennzeichnet, dass** das Mantelrohr (2) auf der der Blattfeder (7) gegenüberliegenden Seite ausschließlich unter Zwischenschaltung eines Schmiermittelfilms (13) am Trägerkörper (4) anliegt.

5. Lenksäule (1) nach einem der Ansprüche 1 bis 4, **dadurch gekennzeichnet, dass** die Blattfeder (7) in einer Öffnung (14) im Trägerkörper (4) angeordnet ist, wobei die Blattfeder (7) zur Montage von außen durch die Öffnung (14) hindurch einführbar und gegen das Mantelrohr (2) drückbar ist.

6. Lenksäule (1) nach einem der Ansprüche 1 bis 5, **dadurch gekennzeichnet, dass** die Blattfeder (7) in einer Öffnung (14) im Trägerkörper (4) angeordnet ist, wobei eine Öffnungsfläche der Öffnung (14) zumindest so groß ist wie die Blattfeder (7).

7. Lenksäule (1) nach Anspruch 5 oder 6, **dadurch gekennzeichnet, dass** die Öffnung (14) im Trägerkörper (4) ausschließlich von zueinander parallelen Wänden begrenzt ist.

8. Lenksäule (1) nach einem der Ansprüche 1 bis 7, **dadurch gekennzeichnet, dass** die Blattfeder (7) auf ihrer von dem Mantelrohr (2) abgewandten Seite mittels zumindest eines Bolzens (15) oder zumindest einer Schraube (16) abgestützt ist.

9. Lenksäule (1) nach einem der Ansprüche 1 bis 8, **dadurch gekennzeichnet, dass** der Lagerkörper (17) ein Lagerkörper (17) aus Kunststoff ist.

10. Lenksäule (1) nach Anspruch 9, **dadurch gekennzeichnet, dass** der Lagerkörper (17) in einem Querschnitt zumindest bereichsweise keilförmig ausgebildet ist und/oder zumindest eine bereichsweise zylindermantelförmig gekrümmte Oberfläche (18) zur Anlage am Mantelrohr (2) aufweist.

11. Lenksäule (1) nach einem der Ansprüche 1 bis 10, **dadurch gekennzeichnet, dass** sich die Blattfeder (7) über höchstens die Hälfte des Umfangs des Mantelrohres (2) erstreckt.

12. Lenksäule (1) nach einem der Ansprüche 1 bis 11, **dadurch gekennzeichnet, dass** das Mantelrohr (2) in der jeweils eingestellten Position in Längsrichtung (5) der Lenkspindel (3), vorzugsweise ausschließlich, vom motorischen Längsverstellantrieb (6) gehalten ist.

## Claims

1. Steering column (1) for a motor vehicle, with a jacket tube (2) for the rotatable mounting of a steering spindle (3) of the steering column (1), and with a support body (4) which engages at least in regions around the jacket tube (2), wherein the jacket tube (2) is mounted in the support body (4) so as to be displaceable at least in a longitudinal direction (5) of the steering spindle (3), wherein the steering column (1) comprises at least one leaf spring (7) which, in a transverse direction (8) orthogonally to the longitudinal direction (5) of the steering spindle (3), presses against a cylinder-jacket-shaped portion (9) of the jacket tube (2), wherein the leaf spring (7) has at least two supporting surfaces which are spaced apart from each other in the circumferential direction (10) of the jacket tube (2) and with which said leaf spring presses against the jacket tube (2) directly or with the interposition of at least one bearing body (17), wherein the leaf spring (7) both when directly pressing against the jacket tube (2) and when pressing against the jacket tube (2) with the interposition of the bearing body (17) presses exclusively with its side facing the jacket tube (2) against the jacket tube (2), **characterized in that** the leaf spring (7) presses against the jacket tube (2) at at least two points (11, 12) which are spaced apart from each other in the circumferential direction (10) of the jacket tube (2).

2. Steering column according to Claim 1, **characterized in that** the jacket tube is mounted in the support body so as to be displaceable at least in the longitudinal direction (5) of the steering spindle (3) by means of a motorized longitudinal adjustment drive (6) of the steering column (1).

3. Steering column according to Claim 1 or 2, **characterized in that** the leaf spring (7) presses with its supporting surfaces, which are spaced apart from each other in the circumferential direction (10) of the jacket tube (2), against the jacket tube (2) at the points (11, 12) which are spaced apart from each other in the circumferential direction (10) of the jacket tube (2).

4. Steering column (1) according to one of Claims 1 to 3, **characterized in that** the jacket tube (2) lies against the support body (4) on the side opposite the leaf spring (7) exclusively with the interconnection of a lubricant film (13).

5. Steering column (1) according to one of Claims 1 to 4, **characterized in that** the leaf spring (7) is arranged in an opening (14) in the support body (4), wherein the leaf spring (7) can be introduced for mounting purposes from the outside through the opening (14) and can be pressed against the jacket tube (2).

6. Steering column (1) according to one of Claims 1 to 5, **characterized in that** the leaf spring (7) is arranged in an opening (14) in the support body (4), wherein an opening area of the opening (14) is at least as large as the leaf spring (7).

7. Steering column (1) according to Claim 5 or 6, **characterized in that** the opening (14) in the support body (4) is bounded exclusively by walls which are parallel to one another.

8. Steering column (1) according to one of Claims 1 to 7, **characterized in that** the leaf spring (7) is supported on its side facing away from the jacket tube (2) by means of at least one bolt (15) or at least one screw (16).

9. Steering column (1) according to one of Claims 1 to 8, **characterized in that** the bearing body (17) is a bearing body (17) composed of plastic.

10. Steering column (1) according to Claim 9, **characterized in that** the bearing body (17) is of wedge-shape design at least in regions in a cross section, and/or comprises at least one surface (18) which is curved in a cylinder-jacket-shaped manner in regions, for lying against the jacket tube (2).

11. Steering column (1) according to one of Claims 1 to 10, **characterized in that** the leaf spring (7) extends over at most half of the circumference of the jacket tube (2).

12. Steering column (1) according to one of Claims 1 to 11, **characterized in that** the jacket tube (2) is held in the respectively set position in the longitudinal direction (5) of the steering spindle (3), preferably exclusively, by the motorized longitudinal adjustment drive (6).

## Revendications

1. Colonne de direction (1) pour un véhicule automobile avec un tube enveloppe (2) pour le soutien rotatif d'un arbre de direction (3) de la colonne de direction (1) et avec un corps de support (4) entourant au moins localement le tube enveloppe (2), dans laquelle le tube enveloppe (2) est supporté de façon coulissante dans le corps de support (4) au moins dans une direction longitudinale (5) de l'arbre de direction (3), dans laquelle la colonne de direction (1) présente au moins un ressort à lame (7), qui appuie dans une direction transversale (8) orthogonale à la direction longitudinale (5) de l'arbre de direction (3) contre une partie en forme d'enveloppe cylindrique (9) du tube enveloppe (2), dans laquelle le ressort à lame (7) présente au moins deux faces d'appui distantes l'une de l'autre dans la direction périphérique (10) du tube enveloppe (2), avec lesquelles il appuie contre le tube enveloppe (2) directement ou avec interposition d'au moins un corps de palier (17), dans laquelle le ressort à lame (7) appuie, aussi bien en cas d'appui direct sur le tube enveloppe (2) qu'en cas d'appui sur le tube enveloppe (2) avec interposition du corps de palier (17), sur le tube enveloppe (2) exclusivement avec son côté tourné vers le tube enveloppe (2), **caractérisée en ce que** le ressort à lame (7) appuie contre le tube enveloppe (2) en au moins deux endroits (11, 12) distants l'un de l'autre dans la direction périphérique (10) du tube enveloppe (2).

2. Colonne de direction selon la revendication 1, **caractérisée en ce que** le tube enveloppe est supporté de façon coulissante dans le corps de support au moins dans la direction longitudinale (5) de l'arbre de direction (3) au moyen d'un entraînement de déplacement longitudinal motorisé (6) de la colonne de direction (1).

3. Colonne de direction selon la revendication 1 ou 2, **caractérisée en ce que** le ressort à lame (7) appuie contre le tube enveloppe (2) avec ses faces d'appui distantes l'une de l'autre dans la direction périphérique (10) du tube enveloppe (2) sur les endroits (11, 12) distants l'un de l'autre dans la direction périphérique (10) du tube enveloppe (2).

4. Colonne de direction (1) selon l'une quelconque des revendications 1 à 3, **caractérisée en ce que** le tube enveloppe (2) s'applique sur le corps de support (4), sur le côté opposé au ressort à lame (7), exclusivement avec interposition d'un film lubrifiant (13).

5. Colonne de direction (1) selon l'une quelconque des revendications 1 à 4, **caractérisée en ce que** le ressort à lame (7) est disposé dans une ouverture (14) dans le corps de support (4), dans laquelle le ressort à lame (7) peut pour le montage être introduit par l'extérieur dans l'ouverture (14) et être pressé contre le tube enveloppe (2).

6. Colonne de direction (1) selon l'une quelconque des revendications 1 à 5, **caractérisée en ce que** le ressort à lame (7) est disposé dans une ouverture (14) dans le corps de support (4), dans laquelle une surface ouverte de l'ouverture (14) est au moins aussi grande que le ressort à lame (7).

7. Colonne de direction (1) selon la revendication 5 ou 6, **caractérisée en ce que** l'ouverture (14) dans le corps de support (4) est limitée exclusivement par des parois parallèles l'une à l'autre.

8. Colonne de direction (1) selon l'une quelconque des revendications 1 à 7, **caractérisée en ce que** le ressort à lame (7) s'appuie sur son côté détourné du tube enveloppe (2) au moyen d'au moins un boulon (15) ou d'au moins une vis (16).

9. Colonne de direction (1) selon l'une quelconque des revendications 1 à 8, **caractérisée en ce que** le corps de palier (17) est en corps de palier (17) en matière plastique.

10. Colonne de direction (1) selon la revendication 9, **caractérisée en ce que** le corps de palier (17) est réalisé au moins localement en forme de coin dans une section transversale et/ou présente au moins une surface courbe localement en forme d'enveloppe cylindrique (18) pour l'application sur le tube enveloppe (2).

11. Colonne de direction (1) selon l'une quelconque des revendications 1 à 10, **caractérisée en ce que** le ressort à lame (7) s'étend au maximum sur la moitié de la périphérie du tube enveloppe (2).

12. Colonne de direction (1) selon l'une quelconque des revendications 1 à 11, **caractérisée en ce que** le tube enveloppe (2) est maintenu dans la position respectivement réglée en direction longitudinale (5) de l'arbre de direction (3), de préférence exclusivement, par l'entraînement de déplacement longitudinal motorisé (6).
